# EUROPÄISCHE PATENTSCHRIFT

(11) **EP 3 271 595 B1**
(45) Veröffentlichungstag und Bekanntmachung des Hinweises auf die Patenterteilung: **08.05.2019**
(21) Anmeldenummer: 16714249.6
(22) Anmeldetag: 14.03.2016
(51) Int. Cl.: F16C 1/20

(54) **ANTRIEBSKABEL ZUR BETÄTIGUNG EINES FAHRZEUGELEMENTS**
DRIVE CABLE FOR ACTUATING A VEHICLE ELEMENT
CÂBLE D'ENTRAÎNEMENT SERVANT À ACTIONNER UN ÉLÉMENT DE VÉHICULE

(30) Priorität: 18.03.2015 DE 102015104068
(43) Veröffentlichungstag der Anmeldung: 24.01.2018
(73) Patentinhaber: Webasto SE, 82131 Stockdorf (DE); Küster Automotive GmbH, 35630 Ehringshausen (DE)
(72) Erfinder: SCHREIBER, Ulrich, 82131 Stockdorf (DE); REINHARDT, Günter, 35614 Aßlar (DE)
(74) Vertreter: advotec.
(86) Internationale Anmeldenummer: PCT/EP2016/055460
(87) Internationale Veröffentlichungsnummer: WO 2016/146589

(56) Entgegenhaltungen:
- DE-A1- 3 042 234
- DE-C- 659 050
- JP-A- 2004 019 732
- US-A1- 2012 277 047

## Beschreibung

Die Erfindung betrifft ein Antriebskabel zur Betätigung eines gegenüber einem Fahrzeugaufbau beweglichen Fahrzeugelements mit den Merkmalen des Oberbegriffs des Patentanspruches 1.

Ein derartiges Antriebskabel ist aus der Praxis bekannt und dient beispielsweise zum Betätigen eines Deckelelements einer Schiebedachanordnung, mittels dessen eine Dachöffnung des betreffenden Fahrzeugs wahlweise geschlossen oder zumindest teilweise freigegeben werden kann. Das Antriebskabel, das in einer Kabelführung angeordnet ist, überträgt hierbei ein Antriebsmoment von einem Antriebsmotor auf das bewegliche Fahrzeugelement.

Aus der Druckschrift DE 10 2010 055 809 B4 ist ein als Steigungskabel ausgebildetes Antriebskabel für ein bewegliches Fahrzeugelement bekannt. Dieses Antriebskabel umfasst einen Kabelkörper, der mit einer flexiblen Kabelseele ausgebildet ist, welche mit einer einer Schraubenlinie folgenden Wendel umwickelt ist. Die Wendel wirkt nach Art einer Verzahnung und kann mit einem Antriebszahnrad in Eingriff gebracht werden, das von einem Antriebsmotor angetrieben ist. Um durch eine Betätigung des Antriebskabels erzeugte Geräusche zu verringern, ist das Antriebskabel zusätzlich mit einem Flock versehen. Jedoch unterliegt der Flock über die Lebensdauer des Antriebskabels einem Verschleiß, was wiederum zu Lasten des Geräuschverhaltens des Antriebskabels geht. Zudem kann auch die Wendel an etwaigen Störstellen der Kabelführung ein ungewolltes Geräuschverhalten zeigen.

Aus der Druckschrift US 2012/277047 A1 ist ein Kabel mit einer Kabelseele und einer Ummantelung bekannt. Die Kabelseele ist zur Ausbildung einer Verzahnungslinie mit einem Draht umwickelt, so dass das Kabel mit einem Zahnrad in Eingriff gebracht werden kann.

Die Druckschrift JP 2004 019732 A offenbart ein Kabel mit einem Kern und einer Ummantelung mit Längsrippen.

Aus Druckschrift DE 659 050 C ist eine Vorrichtung zum Übertragen von Kraft oder Bewegungen bekannt. Die Vorrichtung ist ein biegsames Kabel mit einem Kern und Rippen, die eine Verzahnung bilden.

Die Druckschrift DE 30 42 234 A1 lehrt ein Antriebskabel mit einem Drahtseilkern, der mit einer Arbeitswicklung versehen ist, die in Eingriff mit einem Zahnrad gebracht werden kann.

Der Erfindung liegt die Aufgabe zugrunde, ein Antriebskabel der einleitend genannten Gattung zu schaffen, das hinsichtlich des Geräuschverhaltens langfristig hohen Anforderungen genügt.

Diese Aufgabe ist erfindungsgemäß durch das Antriebskabel mit den Merkmalen des Patentanspruches 1 gelöst.

Erfindungsgemäß wird also vorgeschlagen, am Umfang des Kabelkörpers, der ein Steigungskabel mit einer nach Art einer Verzahnung wirkenden Wendel darstellt, mindestens drei Längsrippen auszubilden, über die sich das Antriebskabel in einer Kabelführung abstützen kann. Die Längsrippen bilden zumindest weitgehend durchgängige Führungs- und Kontaktlinien des Antriebskabels zu der Kabelführung. Damit können potentielle Ratterkanten vermieden werden. Zugleich kann das Antriebskabel in seiner Führung zentriert werden. Die Längsrippen haben dadurch eine entklappernde Wirkung. Aufgrund der durchgängigen Führungslinien ist auch die Reibung des Antriebskabels in einer Führung bzw. einem Kabelkanal gering. Insgesamt kann somit das Geräuschverhalten eines mit dem Antriebskabel nach der Erfindung ausgestatteten Antriebssystems gegenüber mit herkömmlichen Antriebskabeln ausgestatteten Antriebssystemen erheblich reduziert werden. Zudem kann mit den Rippen auch ein Toleranzausgleich realisiert werden.

Die Längsrippen oder Stege können nach dem Eingriff eines Zahnrads verformt sein, weswegen dann die betreffende Längsrippe bzw. der betreffende Steg eine durch die Verformung unterbrochene Führungs- und Kontaktlinie bildet. Diese Führungs- und Kontaktlinie ist dann also nur noch weitgehend durchgängig. Vor dem Eingriff des Zahnrads bilden alle Rippen bzw. Stege aber unterbrechungsfreie Führungs- und Kontaktlinien, die durchgängig ausgebildet sind und deren Abstand zur Kabelachse durchgängig konstant ist. Die Rippen bzw. Stege überbrücken damit also auch die Zwischenräume zwischen den einzelnen Wendelwindungen.

Die Führungs- und Kontaktlinien haben jeweils einen durchgängig konstanten Abstand zur Kabelachse. Der konstante Abstand beinhaltet im Sinne der Erfindung auch Restwelligkeiten und sonstige Schwankungen, die beispielsweise fertigungsbedingt oder toleranzbedingt sind.

Um einen Eingriff eines Antriebszahnrads in die von der Wendel gebildete Verzahnung des Antriebskabels zu ermöglichen, sind die Rippen bei einer zweckmäßigen Ausführungsform des Antriebskabels nach der Erfindung aus einem elastisch oder plastisch verformbaren Kunststoff gebildet. Die Rippen werden also bei einem Eingriff des Antriebszahnrads bedarfsabhängig deformiert und/oder verdrängt, um ein schlupffreies Betätigen des Antriebskabels zu ermöglichen. Die Längsrippen, die insbesondere über den Umfang des Kabelkörpers verteilt sind und die außerhalb des Eingriffsbereichs des Antriebszahnrads angeordnet sind, erfahren keine Verformung. Vielmehr bleiben diese Führungsrippen bestehen, so dass ihre Führungsfunktion in der Kabelführung erhalten bleibt.

Die Wendel des Antriebskabels nach der Erfindung ist aus einer Umwicklung der Kabelseele gebildet. Zweckmäßigerweise besteht die Umwicklung aus einem Draht, der einer Schraubenlinie folgend um die Kabelseele gewickelt ist.

Zweckmäßigerweise ist das Kunststoffmaterial, aus dem die Längsrippen gebildet sind, so gewählt, dass es über die Lebensdauer des Antriebskabels nicht reißt.

Bei einer speziellen Ausführungsform des Antriebskabels nach der Erfindung sind die Längsrippen parallel zur neutralen Faser, d.h. parallel zur Längsrichtung der Kabelseele ausgerichtet. Beispielsweise sind in diesem Fall mindestens sechs Längsrippen ausgebildet.

Bei einer alternativen Ausführungsform, die für eine besonders sichere Führung und Abstützung des Antriebskabels in seiner Führung sorgt, folgen die Längsrippen jeweils einer Schraubenlinie, die eine größere Steigung hat als die Schraubenlinie, der die Wendel folgt, mit der die flexible Kabelseele umwickelt ist. Gegenüber der Ausführungsform mit parallel zur neutralen Faser der Kabelseele angeordneten Längsrippen kann eine den Ansprüchen genügende Führung mit einer geringeren Anzahl an Längsrippen realisiert werden. Zudem kann durch einen geeigneten Steigungswinkel der Längsrippen verhindert werden, dass durch eine etwaige Querbelastung der Längsrippen, die zu einem Umklappen derselben führen könnte, Rattergeräusche entstehen. Auch kann gegenüber axial ausgerichteten Längsrippen eine weichere Abstützung bzw. ein besseres Dämpfungsverhalten realisiert werden.

Die Schraubenlinien, denen die Längsrippen folgen, sind zweckmäßigerweise gegensinnig zu der Schraubenlinie angeordnet, der die Wendel folgt.

Bei einer fertigungstechnisch einfach umsetzbaren Ausführungsform des Antriebskabels nach der Erfindung sind die Längsrippen Bestandteil einer Ummantelung des Kabelkörpers.

Beispielsweise ist die Ummantelung eine Extrusionsschicht, d. h. nach einem Extrusionsverfahren auf den Kabelkörper aufgebracht.

Um das Geräuschverhalten des Antriebskabels nach der Erfindung bei der Betätigung weiter zu verbessern, können zwischen der Ummantelung und dem Kabelkörper Füllkörper angeordnet sein. Die Füllkörper sind insbesondere aus einem plastisch oder elastisch verformbaren Material, vorzugsweise aus Kunststoff gefertigt. Beispielsweise umfassen die Füllkörper einen Flock, ein Gel, einen Schaum, insbesondere einen offenporigen Schaum, ein Band, eine Schnur, eine Profilschnur, einen Schlauch und/oder dergleichen. Die Füllkörper können verschiedenartig aufgebracht sein. Beispielsweise können sie gewickelt oder extrudiert sein.

Alternativ wird erfindungsgemäß vorgeschlagen, das Steigungskabel mit einem Kabelmantel zu versehen, der bei gestreckter Kabelseele eine zylindrische, rippenfreie Kabelumfangsfläche bildet, die konzentrisch bezüglich der Kabelachse angeordnet ist. Ein solcher Kabelmantel, dessen Umfangsfläche zumindest weitgehend geschlossen ausgebildet ist, bildet eine durchgängige Führungsfläche des Antriebskabels in einer Kabelführung. Ein solches Antriebskabel ist frei von potentiellen Ratterkanten, wobei gleichzeitig durch die geschlossene Kabelumfangs- bzw. Mantelfläche eine Zentrierung des Antriebskabels in der Kabelführung gewährleistet ist. Aufgrund der geschlossenen Führungsfläche kann auch die Reibung des Antriebskabels in der Führung bzw. einem Kabelkanal niedrig gehalten werden. Somit ist auch bei dieser Ausführungsform das Geräuschverhalten eines mit dem Antriebskabel ausgestatteten Antriebssystems gegenüber mit herkömmlichen Antriebskabeln ausgestatteten Antriebssystemen erheblich reduziert.

Der Kabelmantel kann nach dem Eingriff eines Zahnrads in das Antriebskabel verformt sein, so dass dann die zylindrische, rippenfreie Kabelumfangsfläche mit korrespondierenden Einkerbungen versehen ist. Vor dem Eingriff des Zahnrads ist die von dem Kabelmantel gebildete Kabelumfangsfläche aber geschlossen, das heißt durchgängig ausgebildet. Die Kabelmantelfläche überbrückt auch die Zwischenräume zwischen den Windungen der Wendel.

Um einen Eingriff eines Antriebszahnrads in die von der Wendel gebildete Verzahnung des Antriebskabels zu ermöglichen, ist der Kabelmantel zweckmäßigerweise elastisch oder plastisch verformbar ausgebildet. Dies kann durch Einsatz eines entsprechenden elastisch oder plastisch verformbaren Kunststoffs realisiert sein. Der Kabelmantel wird also bei Eingriff des Antriebszahnrads bedarfsabhängig verformt, um ein schlupffreies Betätigen des Antriebskabels zu ermöglichen. Die Verformung des Kabelmantels erfolgt nur in dem Bereich entlang einer sich axial erstreckenden Umfangslinie, in den das Antriebszahnrad eingreift.

Bei einer speziellen Ausführungsform des Antriebskabels nach der Erfindung ist der Kabelmantel von einer Kabelhülse gebildet, die die Wendel übergreift. Die Kabelhülse kann eine Extrusionsschicht sein, die nach einem Extrusionsverfahren unter Nutzung von Stützluft auf das aus der Kabelseele und der Wendel bestehende Steigungskabel aufgebracht ist.

Zur weiteren Verbesserung des Geräuschverhaltens des Antriebskabels bei seiner Betätigung können auch bei dieser Ausführungsform zwischen der Kabelhülse und der Kabelseele Füllkörper angeordnet sein, die insbesondere aus einem plastisch oder elastisch verformbaren Material, vorzugsweise aus Kunststoff gefertigt sind. Beispielsweise umfassen diese Füllkörper einen Flock, ein Gel, einen Schaum, insbesondere einen offenporigen Schaum, ein Band, eine Schnur, eine Profilschnur, einen Schlauch und/oder dergleichen. Auch diese Füllkörper können nach verschiedenartigen Verfahren aufgebracht sein, beispielsweise nach einem Wickelverfahren oder einem Extrusionsverfahren.

Bei einer alternativen Ausführungsform des Antriebskabels nach der Erfindung umgreift der Kabelmantel die Kabelseele und die Wendel derart formschlüssig, dass die Zwischenräume zwischen den Wendelwindungen ausgefüllt sind. Der Kabelmantel bildet dann also eine massive Hülle des Kabels, in die die Verzahnung eines Antriebszahnrads eingreifen kann. Ein derartig ausgebildeter Kabelmantel kann aus einem elastisch oder plastisch verformbaren Material, vorzugsweise aus Kunststoff gefertigt sein.

Weitere Vorteile und vorteilhafte Ausgestaltungen des Gegenstandes der Erfindung sind der Beschreibung, der Zeichnung und den Patentansprüchen entnehmbar.

Ausführungsbeispiele eines Antriebskabels nach der Erfindung sind in der Zeichnung schematisch vereinfacht dargestellt und werden in der nachfolgenden Beschreibung näher erläutert. Es zeigt:
- Fig. 1: eine schematische Draufsicht auf ein Fahrzeugdach mit einer Antriebseinheit für ein bewegliches Deckelelement;
- Fig. 2: eine perspektivische Ansicht einer ersten Ausführungsform eines Antriebskabels der Antriebseinheit nach Fig. 1;
- Fig. 3: a) eine Seitenansicht des Antriebskabels und b) einen Längsschnitt des Antriebskabels nach Fig. 2;
- Fig. 4: einen Querschnitt durch das Antriebskabel nach Fig. 2 in einem Kabelkanal;
- Fig. 5: eine perspektivische Ansicht einer weiteren Ausführungsform eines Antriebskabels nach der Erfindung;
- Fig. 6: a) eine Seitenansicht und b) einen Längsschnitt des Antriebskabels nach Fig. 5;
- Fig. 7: einen Querschnitt durch das Antriebskabel nach Fig. 5 in einem Kabelkanal;
- Fig. 8: eine perspektivische Ansicht einer weiteren Ausführungsform eines Antriebskabels nach der Erfindung;
- Fig. 9: a) eine Seitenansicht und b) einen Längsschnitt des Antriebskabels nach Fig. 8;
- Fig. 10: einen Querschnitt durch das Antriebskabel nach Fig. 8 in einem Kabelkanal;
- Fig. 11: eine perspektivische Ansicht einer weiteren Ausführungsform eines Antriebskabels nach der Erfindung;
- Fig. 12: a) eine Seitenansicht und b) einen Längsschnitt des Antriebskabels nach Fig. 11;
- Fig. 13: einen Querschnitt durch das Antriebskabel nach Fig. 11 in einem Kabelkanal;
- Fig. 14: eine perspektivische Ansicht einer weiteren Ausführungsform eines Antriebskabels nach der Erfindung;
- Fig. 15: a) eine Seitenansicht und b) einen Längsschnitt des Antriebskabels nach Fig. 14;
- Fig. 16: einen Querschnitt durch das Antriebskabel nach Fig. 14 in einem Kabelkanal;
- Fig. 17: eine perspektivische Ansicht einer weiteren Ausführungsform eines Antriebskabels nach der Erfindung;
- Fig. 18: a) eine Seitenansicht und b) einen Längsschnitt des Antriebskabels nach Fig. 17;
- Fig. 19: einen Querschnitt durch das Antriebskabel nach Fig. 17 in einem Kabelkanal;
- Fig. 20: eine perspektivische Ansicht einer weiteren Ausführungsform eines Antriebskabels nach der Erfindung;
- Fig. 21: a) eine Seitenansicht und b) einen Längsschnitt des Antriebskabels nach Fig. 20;
- Fig. 22: einen Querschnitt durch das Antriebskabel nach Fig. 20 in einem Kabelkanal;
- Fig. 23: eine perspektivische Ansicht einer weiteren Ausführungsform eines Antriebskabels nach der Erfindung;
- Fig. 24: einen Querschnitt durch das Antriebskabel nach Fig. 23 in einem Kabelkanal;
- Fig. 25: einen Längsschnitt durch das Antriebskabel nach Fig. 23;
- Fig. 26: eine perspektivische Ansicht einer weiteren Ausführungsform eines Antriebskabels nach der Erfindung;
- Fig. 27: einen Querschnitt durch das Antriebskabel nach Fig. 26 in einem Kabelkanal;
- Fig. 28: einen Längsschnitt durch das Antriebskabel nach Fig. 26;
- Fig. 29: eine perspektivische Ansicht einer weiteren Ausführungsform eines Antriebskabels nach der Erfindung;
- Fig. 30: einen Querschnitt durch das Antriebskabel nach Fig. 29 in einem Kabelkanal; und
- Fig. 31: einen Längsschnitt durch das Antriebskabel nach Fig. 29.

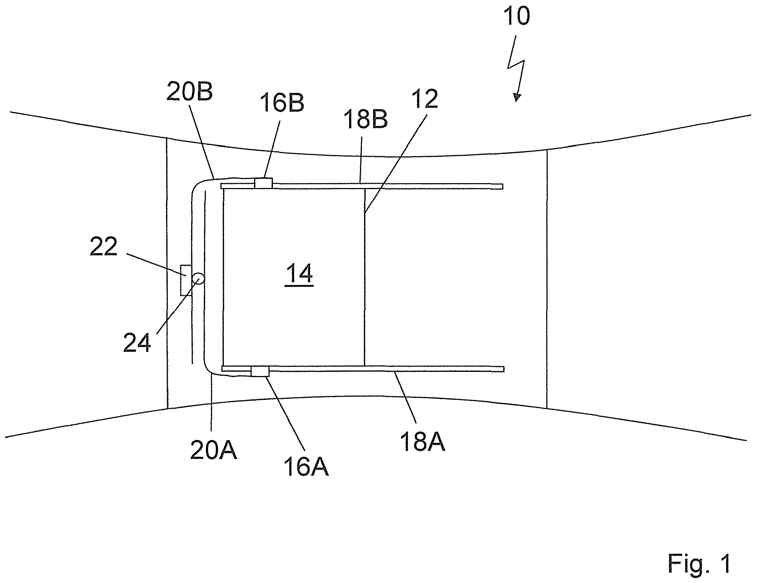

In Fig. 1 ist ein Fahrzeugdach 10 eines ansonsten nicht näher dargestellten Personenkraftwagens dargestellt, das eine Dachöffnung 12 aufweist, die mittels eines Deckelelements 14 wahlweise geschlossen oder zumindest teilweise freigegeben werden kann. Das Deckelelement 14 stellt somit ein gegenüber dem Fahrzeugaufbau bewegliches Fahrzeugelement dar.

Um das Deckelement 14 verstellen zu können, ist es mit einer Verstellkinematik verbunden, die bezogen auf eine vertikale Dachlängsmittelebene beidseits jeweils einen Antriebsschlitten 16A bzw. 16B aufweist, der in einer jeweiligen, sich in Dachlängsrichtung erstreckenden Führungsschiene 18A bzw. 18B geführt ist.

An die Antriebsschlitten 16A und 16B ist jeweils ein drucksteifes Antriebskabel angebunden. Die Antriebskabel 20A und 20B sind über entsprechende Führungsrohre bzw. Kabelkanäle zu einem gemeinsamen Antriebsmotor 22 geführt und stehen mit einem Antriebszahnrad 24 desselben in Eingriff.

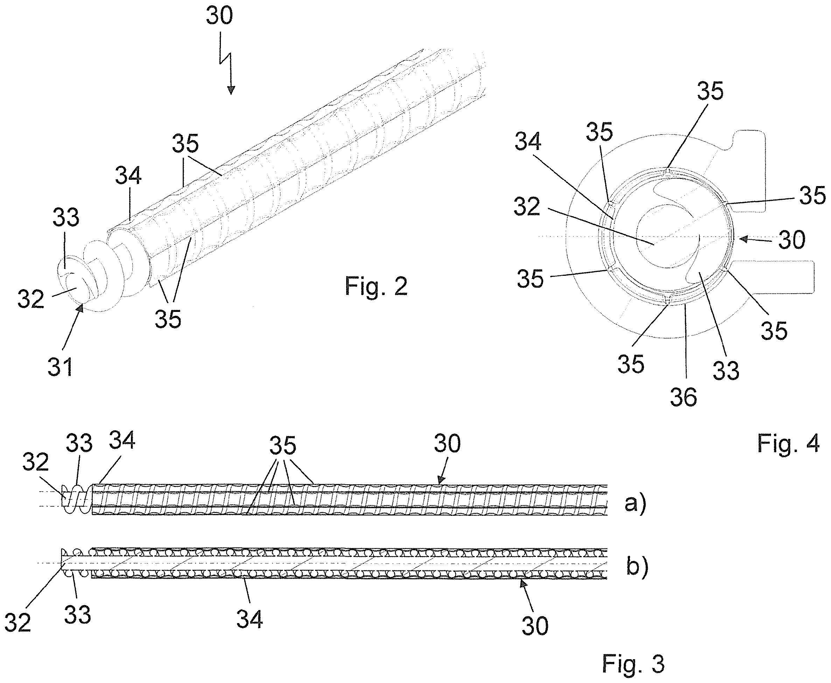

Die Antriebskabel 20A und 20B sind drucksteif ausgebildet und können gemäß den in den Figuren 2 bis 22 dargestellten Ausführungsformen ausgebildet sein.

In den Figuren 2 bis 4 ist ein Antriebskabel 30 dargestellt, das einen Kabelkörper 31 aufweist, der aus einer flexiblen Kabelseele 32 und einer Wendel 33 gebildet ist, die die Kabelseele 32 entlang einer Schraubenlinie umgreift. Die Kabelseele 32 ist aus einem einstückigen Stahldraht oder einem Stahlgeflecht gebildet. Die Wendel 33 besteht ebenfalls aus einem Stahldraht.

Der aus der Kabelseele 32 und der Wendel 33 bestehende Kabelkörper 31, der also ein sogenanntes Steigungskabel bildet, ist mit einer Ummantelung 34 versehen, die als Kunststoff-Extrusionsschicht ausgebildet ist.

Die den Umfang des Kabelkörpers 31 überziehende Ummantelung 34 hat an ihrer Außenseite sechs Längsrippen 35, die sich in axialer Richtung des Kabelkörpers 31, d. h. parallel zur neutralen Faser der Kabelseele 32 erstrecken. Die Längsrippen 35 sind in Umfangsrichtung äquidistant auf der Ummantelung 34 verteilt, d. h. die Ebenen benachbarter Längsrippen 35 schneiden sich in einem Winkel von 60°.

Wie Fig. 4 zu entnehmen ist, stützt sich das Antriebskabel 30 im Einbauzustand über seine Längsrippen 35 in einem Führungs- bzw. Kabelkanal 36 ab, der beispielsweise an den in Fig. 1 dargestellten Führungsschienen 18A und 18B ausgebildet sein kann. In dem Abschnitt des Antriebskabels 30, der mit dem Antriebszahnrad 24 des Antriebsmotors 22 während der Betätigung des Deckelements 14 in Eingriff kommt, wird die Ummantelung 34 verformt, so dass das Antriebszahnrad 24 und die Wendel 33 des Kabelkörpers 31 kämmen können. Die Verformung der Ummantelung 34 kann elastisch oder plastisch sein.

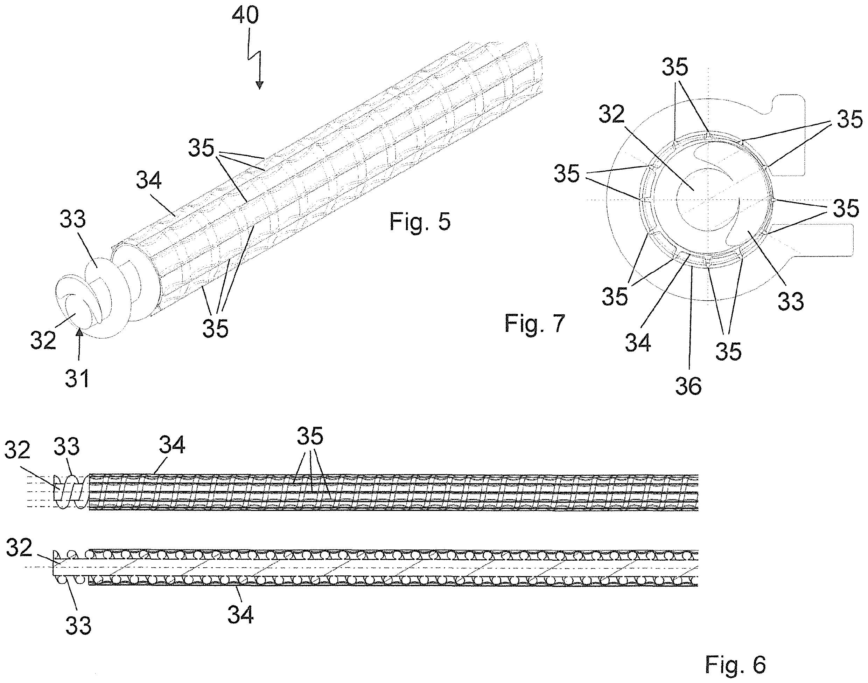

In den Figuren 5 bis 7 ist ein Antriebskabel 40 nach der Erfindung dargestellt, das weitgehend demjenigen nach den Figuren 2 bis 4 entspricht, sich von diesem aber dadurch unterscheidet, dass es eine Kunststoffummantelung 34 aufweist, die an ihrer Außenseite mit zwölf äquidistant voneinander beabstandeten Längsrippen 35 versehen ist, über die sich das Antriebskabel 40 in einem Führungskanal 36 einer Kabelführung eines Schiebedachantriebs abstützt. Im Übrigen entspricht das Antriebskabel nach den Figuren 5 bis 7 demjenigen nach den Figuren 2 bis 4.

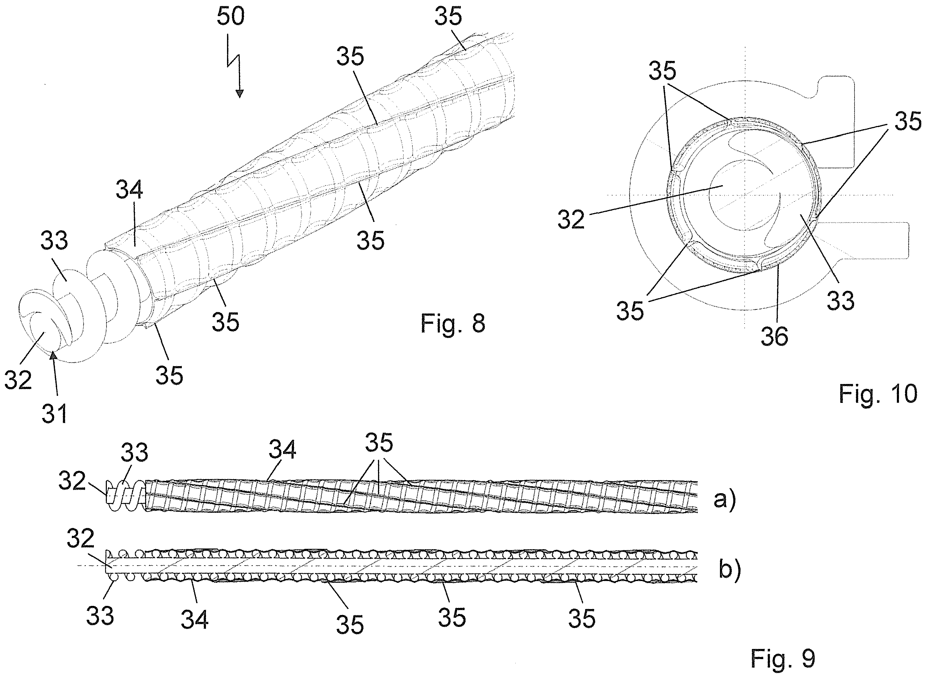

In den Figuren 8 bis 10 ist ein Antriebskabel 50 dargestellt, das ebenfalls weitgehend dem Antriebskabel nach den Figuren 2 bis 4 entspricht, sich von diesem aber dadurch unterscheidet, dass es eine Ummantelung 34 aus plastisch verformbarem Kunststoff aufweist, welche einen Kabelkörper 31 aus einer Kabelseele 32 und einer Wendel 33 umschließt und an ihrer Außenseite sechs äquidistant zueinander angeordnete Längsrippen 35 aufweist, die jeweils einer Schraubenlinie folgen. Die Schraubenlinien, denen die Längsrippen 35 folgen, sind gegensinnig zu der Schraubenlinie ausgerichtet, der die Wendel 33 des Kabelkörpers 31 folgt. Zudem ist die Steigung der Schraubenlinie, der die Längsrippen 35 folgen, ein Vielfaches der Steigung der Schraubenlinie, der die Wendel 33 folgt.

Im Übrigen entspricht das Antriebskabel 50 demjenigen nach den Figuren 2 bis 4.

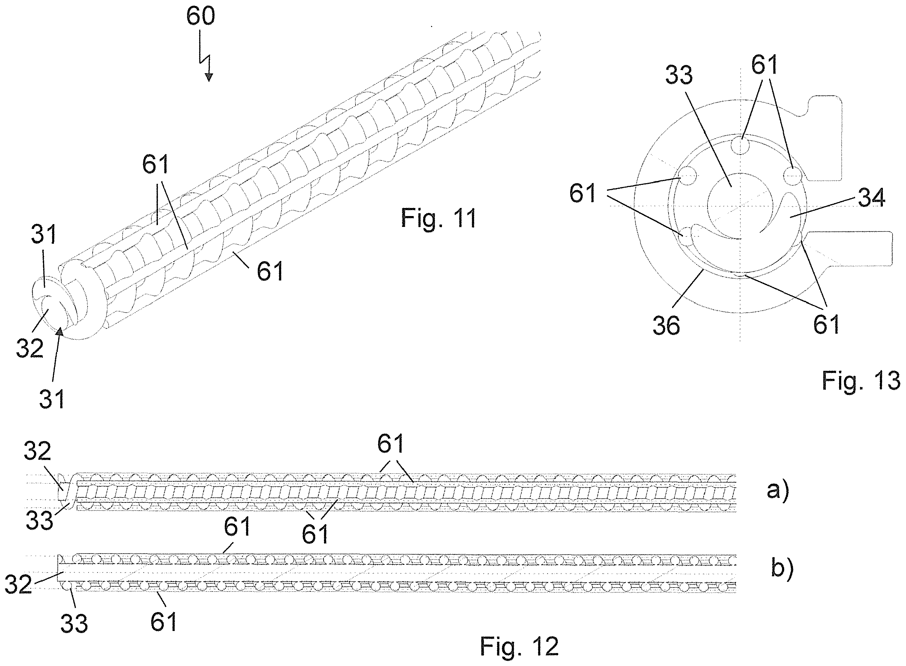

In den Figuren 11 bis 13 ist ein Antriebskabel 60 dargestellt, das ebenfalls einen flexiblen Kabelkörper 31 aus einer Kabelseele 32 umfasst, der von einer Wendel 33 aus Stahldraht umgriffen ist. In Umfangsrichtung sind auf dem Kabelkörper 31 sechs sich in axialer Richtung des Kabelkörpers 31 erstreckende, fadenartige Längsrippen 61 ausgebildet, die jeweils aus einem plastisch verformbaren Kunststoff gebildet sind. Die Längsrippen 61, die einen kreisrunden Querschnitt haben, sind kein Bestandteil einer vollflächigen Ummantelung des Kabelkörpers 31. Vielmehr sind die einzelnen Längsrippen 61 voneinander beabstandet und zwischen den einzelnen Windungen der Wendel 33 mit Abstand zu der Kabelseele 32 angeordnet.

Wie auch bei den Ausführungsformen nach den Figuren 2 bis 10 ist das Antriebskabel 60 über die Längsrippen 61 in einem Führungskanal 36 geführt, der einem Dachöffnungssystem zugeordnet ist.

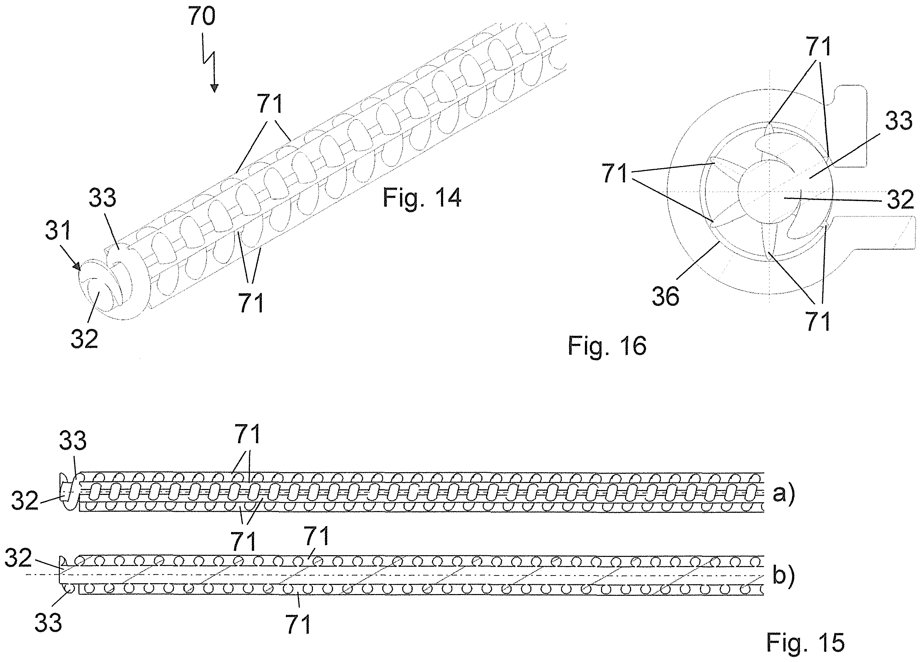

In den Figuren 14 bis 16 ist ein Antriebskabel 70 dargestellt, das weitgehend demjenigen nach den Figuren 11 bis 13 entspricht, sich von diesem aber dadurch unterscheidet, dass es sich in axialer Richtung erstreckende Längsrippen 71 aufweist, die einerseits die Windungen der Wendel 33 über die Erstreckung des Antriebskabels 70 übergreifen und andererseits in den Zwischenräumen zwischen den einzelnen Windungen der Wendel 33 mit der Kabelseele 32 in Kontakt stehen. Die Längsrippen 71, die ebenfalls aus einem plastisch verformbaren Kunststoff bestehen und über die das Antriebskabel 70 in einem Führungskanal 36 geführt ist, haben ausgehend von der Kabelseele 32 einen parabelartigen Querschnitt (vgl. Fig. 16).

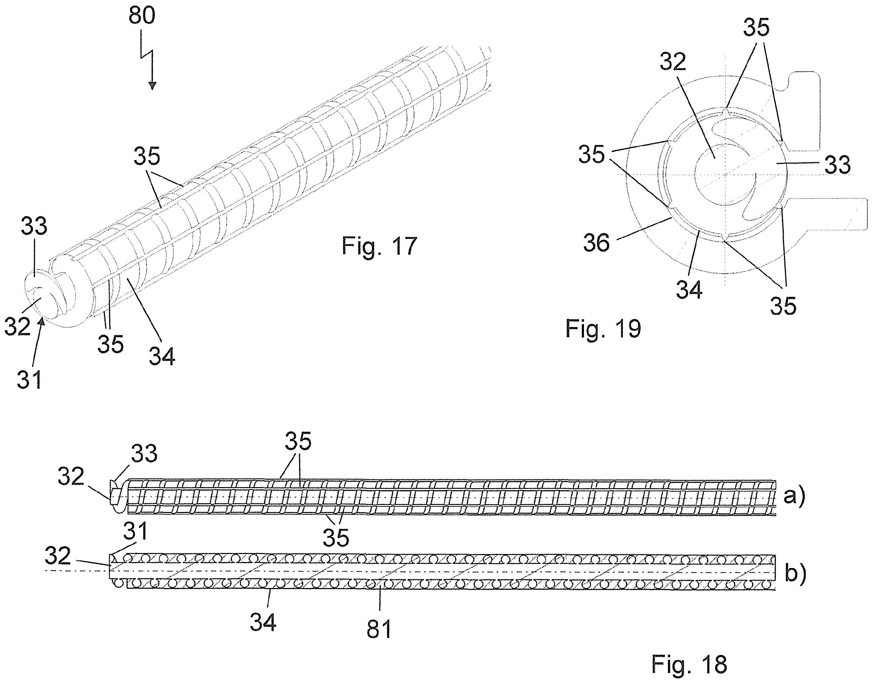

In den Figuren 17 bis 19 ist ein Antriebskabel 80 dargestellt, das weitgehend dem Antriebskabel nach den Figuren 2 bis 4 entspricht, sich von diesem aber dadurch unterscheidet, dass es zwischen seinem Kabelkörper 31, der aus einer Kabelseele 32 und einer Wendel 33 gebildet ist, und seiner Ummantelung 34, die sich in axialer Richtung erstreckende Längsrippen 35 trägt, Füllkörper 81 aufweist, die aus einem Gel, einem offenporigen Schaum oder einem Flock gebildet sind und die die Zwischenräume zwischen den einzelnen Windungen der Wendel 33 ausfüllen.

Im Übrigen entspricht das Antriebskabel 80 demjenigen nach den Figuren 2 bis 4.

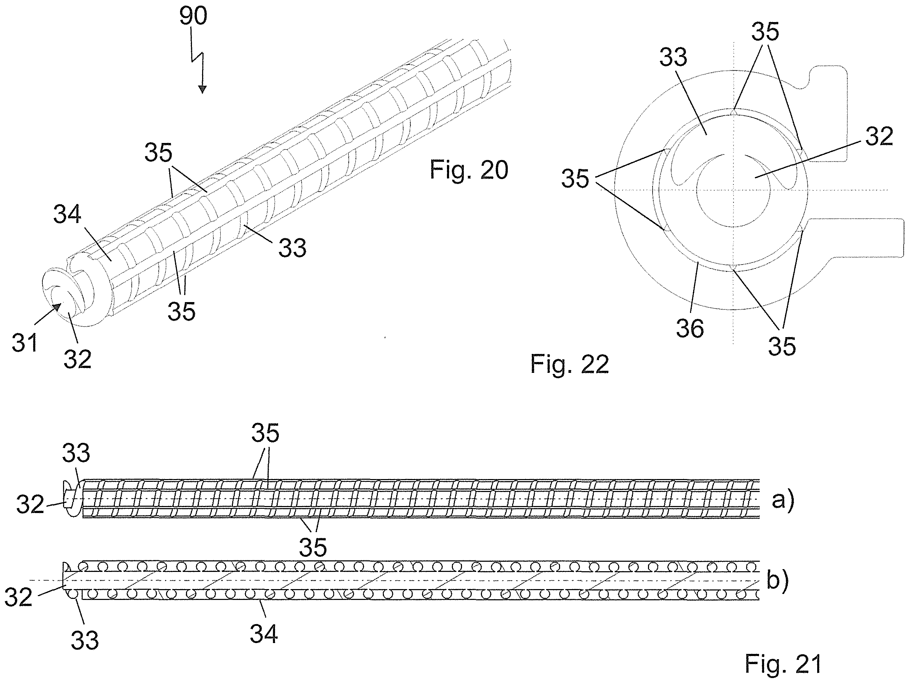

In den Figuren 20 bis 22 ist ein Antriebskabel 90 dargestellt, das ebenfalls einen Kabelkörper 31 umfasst, der aus einer flexiblen Kabelseele 32 und einer die Kabelseele 32 entlang einer Schraubenlinie umschließenden Wendel 33 gebildet ist. Der Kabelkörper 31 hat eine Ummantelung 34, die den Zwischenraum zwischen den einzelnen Gängen der Wendel 33 ausfüllt. Die Ummantelung 34 ist aus einem offenzelligen Schaummaterial gebildet und umfasst an ihrer Außenseite sechs Längsrippen 35, die sich in axialer Richtung der Kabelseele 32 erstrecken und die Wendel 33 übergreifen. Zwischen den in Umfangsrichtung äquidistant verteilten Längsrippen 35 ist die Wendel 33 frei von der Ummantelung 34.

Wie auch bei den oben beschriebenen Ausführungsbeispielen dienen die Längsrippen 35 des Antriebskabels 90 zur klapperfreien und ratterfreien Führung in einem Führungs- bzw. Kabelkanal 36, der an einer Führungsschiene 18A bzw. 18B ausgebildet ist. In dem Abschnitt, in dem das Antriebskabel 90 mit einem Antriebszahnrad 24 eines Antriebsmotors 22 in Eingriff kommt, wird die Ummantelung 34 durch das Antriebszahnrad 24 verformt, so dass dieses mit der Wendel 33 kämmen kann.

Im Übrigen entspricht die Ausführungsform nach den Figuren 20 bis 22 derjenigen nach den Figuren 2 bis 4.

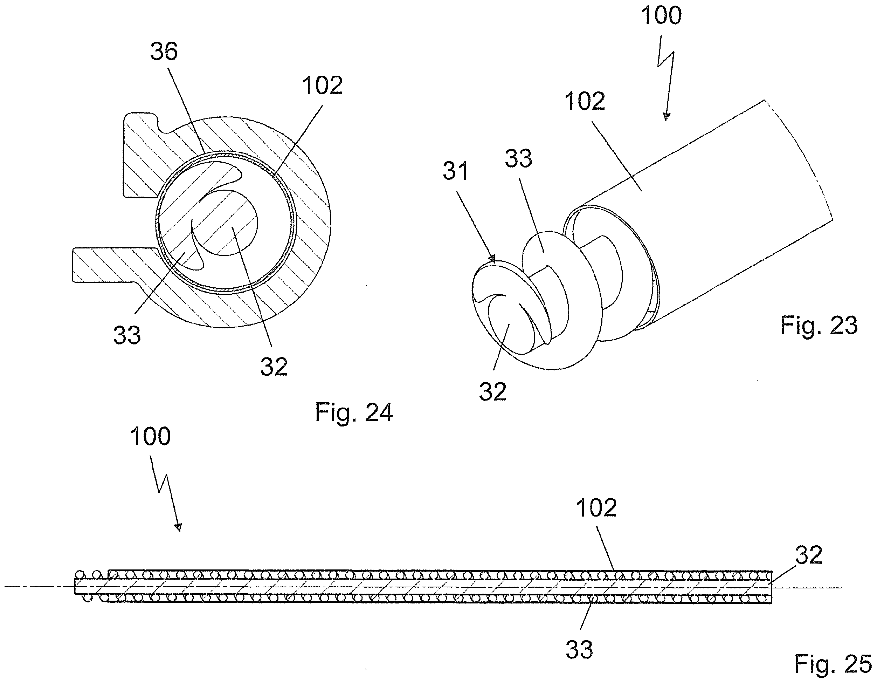

In den Figuren 23 bis 25 ist ein Antriebskabel 100 dargestellt, das einen Kabelkörper 31 aufweist, der aus einer flexiblen Kabelseele 32 und einer Wendel 33 gebildet ist, mit der die Kabelseele 32 einer Schraubenlinie folgend umwickelt ist. Die Kabelseele 32 ist aus einem einstückigen Stahldraht oder einem Stahlgeflecht gebildet. Die Wendel 33 besteht ebenfalls aus einem Stahldraht.

Der aus der Kabelseele 32 und der Wendel 33 bestehende Kabelkörper 31, der ein so genanntes Steigungskabel bildet, ist mit einem Kabelmantel 102 versehen, der eine Kabelhülse darstellt und aus einer Kunststoff-Extrusionsschicht gebildet ist. Der Kabelmantel 102 übergreift den Kabelkörper 31, das heißt die Kabelseele 32 und die Wendel 33 vollständig und bildet eine geschlossene, rippenfreie Mantel- bzw. Führungsfläche, die auch die Zwischenräume zwischen den Windungen der Wendel 33 überbrückt. Die von dem Kabelmantel 102 gebildete Führungsfläche, die der Umfangsfläche des Antriebskabels 100 entspricht, ist glatt und konzentrisch bezüglich der Achse des Antriebskabels 100 angeordnet.

Der Kabelmantel 102 ist aus einem elastisch verformbaren Kunststoff gefertigt, so dass dieser ein bestimmtes Rückstellvermögen hat und nach dem Eingriff eines Antriebszahnrads wieder seine glatte Form annehmen kann. Die Verformbarkeit des Kabelmantels 102 ist erforderlich, um einen schlupffreien Eingriff zwischen dem Antriebszahnrad und der Wendel 33 zu gewährleisten.

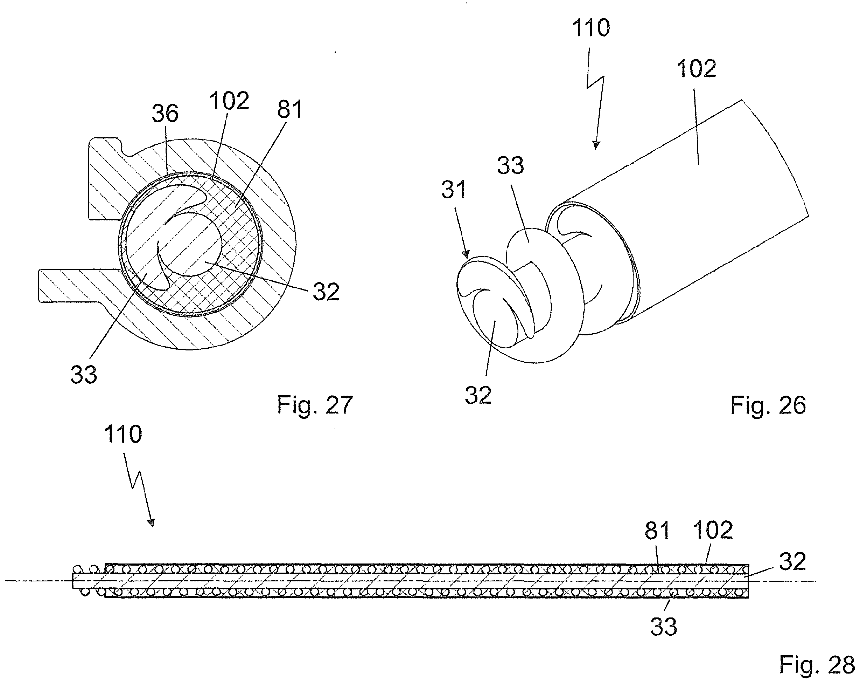

In den Figuren 26 bis 28 ist eine alternative Ausführungsform eines Antriebskabels 110 dargestellt, die weitgehend der Ausführungsform nach den Figuren 23 bis 25 entspricht, sich von dieser aber dadurch unterscheidet, dass sie zwischen dem Kabelmantel 102 und dem Kabelkörper 31 aus der Kabelseele 32 und der Wendel 33 Füllkörper 81 aufweist, die aus einem Gel, einem offenporigen Schaum oder einem Flock gebildet sind und die die Zwischenräume zwischen den einzelnen Windungen der Wendel 33 ausfüllen.

Im Übrigen entspricht das Antriebskabel 110 demjenigen nach den Figuren 23 bis 25.

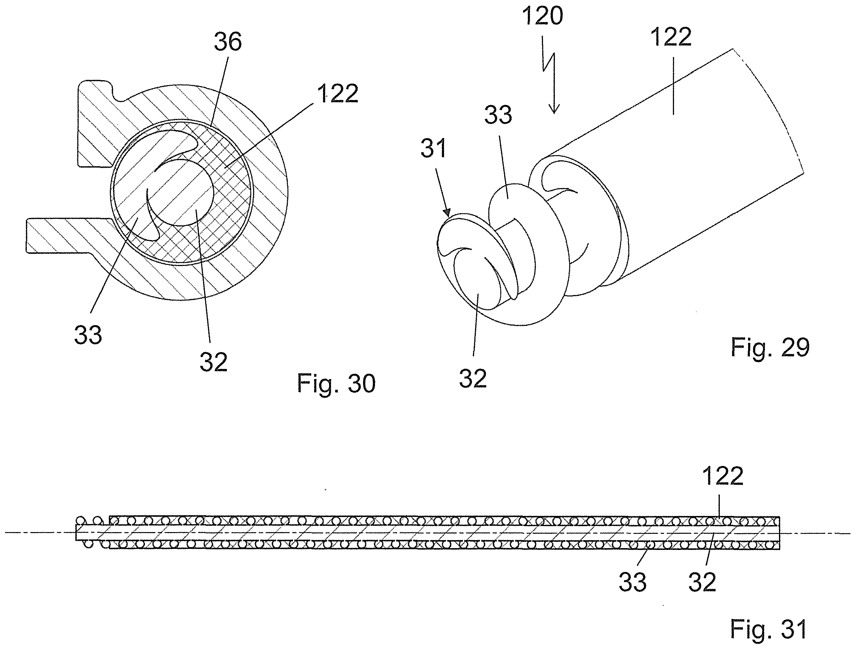

In den Figuren 29 bis 31 ist ein Antriebskabel 120 dargestellt, das entsprechend den obigen Ausführungsformen einen Kabelkörper 31 aus einer Kabelseele 32 und einer Wendel 33 umfasst, die die Kabelseele 32 einer Schraubenlinie folgend umgreift. Die Wendel 33 ist aus einem Stahldraht gebildet und die Kabelseele 32 kann aus Stahldraht oder einem Stahldrahtgeflecht gefertigt sein.

Das Antriebskabel 120 umfasst des Weiteren einen Kabelmantel 122, der massiv ausgebildet ist und den Kabelkörper 31, das heißt die Kabelseele 32 und die Wendel 33 formschlüssig übergreift und bezogen auf die gestreckte Ausrichtung der Kabelseele 32 eine zylindrische rippenfreie Umfangsfläche des Kabels bildet, die rippenfrei und glatt ausgebildet ist. Der Kabelmantel 122 ist aus einem elastisch oder plastisch verformbaren Kunststoff gefertigt und bildet die Führungsfläche des Antriebskabels 120 in einem Führungskanal 36, in dem das Antriebskabel 120 geführt ist.

### Bezugszeichenliste

- 10: Fahrzeugdach
- 12: Dachöffnung
- 14: Deckelelement
- 16A, B: Antriebsschlitten
- 18A, B: Führungsschiene
- 20A, B: Antriebskabel
- 22: Antriebsmotor
- 24: Antriebszahnrad
- 30: Antriebskabel
- 31: Kabelkörper
- 32: Kabelseele
- 33: Wendel
- 34: Ummantelung
- 35: Längsrippen
- 36: Führungskanal
- 40: Antriebskabel
- 50: Antriebskabel
- 60: Antriebskabel
- 61: Längsrippen
- 70: Antriebskabel
- 71: Längsrippen
- 80: Antriebskabel
- 81: Füllkörper
- 90: Antriebskabel
- 100: Antriebskabel
- 102: Kabelmantel
- 110: Antriebskabel
- 120: Antriebskabel
- 122: Kabelmantel

## Patentansprüche

1. Antriebskabel zur Betätigung eines gegenüber einem Fahrzeugaufbau beweglichen Fahrzeugelements, umfassend einen Kabelkörper (31) mit einer flexiblen Kabelseele (32), die zum Eingriff mit einem Zahnrad mit einer einer Schraubenlinie folgenden Wendel (33) umwickelt ist, **dadurch gekennzeichnet, dass** am Umfang des Kabelkörpers (31) mindestens drei Längsrippen (35, 61, 71) oder Stege ausgebildet sind, über die sich das Antriebskabel in einer Kabelführung abstützen kann und die zumindest weitgehend durchgängige Führungs- und Kontaktlinien des Antriebskabels bilden, die jeweils einen durchgängig konstanten Abstand zur Kabelachse haben, oder dass ein elastisch oder plastisch verformbarer Kabelmantel (102, 122) vorgesehen ist, der bei gestreckter Kabelseele (32) eine zylindrische, rippenfreie Kabelumfangsfläche bildet, die konzentrisch bezüglich der Kabelachse angeordnet ist, und der die Kabelseele (32) und die Wendel (33) übergreift.

2. Antriebskabel nach Anspruch 1, **dadurch gekennzeichnet, dass** die Längsrippen (35, 61, 71) parallel zur Längsrichtung der Kabelseele (32) verlaufen.

3. Antriebskabel nach Anspruch 1, **dadurch gekennzeichnet, dass** die Längsrippen (35) jeweils einer Schraubenlinie folgen, die vorzugsweise eine größere Steigung hat als die Schraubenlinie, der die Wendel (33) folgt.

4. Antriebskabel nach Anspruch 3, **dadurch gekennzeichnet, dass** die Schraubenlinie, der die Längsrippen (35) folgen, gegensinnig zu der Schraubenlinie angeordnet ist, der die Wendel (33) folgt.

5. Antriebskabel nach einem der Ansprüche 1 bis 4, **dadurch gekennzeichnet, dass** die Längsrippen (35) Bestandteil einer Ummantelung (34) des Kabelkörpers (31) sind.

6. Antriebskabel nach Anspruch 5, **dadurch gekennzeichnet, dass** die Ummantelung (34) eine Extrusionsschicht ist.

7. Antriebskabel nach Anspruch 5 oder 6, **dadurch gekennzeichnet, dass** zwischen der Ummantelung (34) und dem Kabelkörper (31) Füllkörper (81) angeordnet sind.

8. Antriebskabel nach Anspruch 7, **dadurch gekennzeichnet, dass** die Füllkörper ein plastisch oder elastisch verformbares Material umfassen, das insbesondere einen Flock, ein Gel, einen Schaum, ein Band, eine Schnur, eine Profilschnur, einen Schlauch und/oder dergleichen, vorzugsweise aus Kunststoff, umfasst.

9. Antriebskabel nach einem der Ansprüche 5 bis 8, **dadurch gekennzeichnet, dass** die Ummantelung (34) aus einem elastisch oder plastisch verformbaren Kunststoff gebildet ist.

10. Antriebskabel nach einem der Ansprüche 1 bis 9, **dadurch gekennzeichnet, dass** die Längsrippen (35, 61, 71) aus einem elastisch oder plastisch verformbaren Kunststoff gebildet sind.

11. Antriebskabel nach Anspruch 1, **dadurch gekennzeichnet, dass** der Kabelmantel (102) von einer Kabelhülse gebildet ist, die die Wendel (33) übergreift.

12. Antriebskabel nach Anspruch 11, **dadurch gekennzeichnet, dass** zwischen der Kabelhülse und der Kabelseele (32) Füllkörper (81) angeordnet sind.

13. Antriebskabel nach Anspruch 12, **dadurch gekennzeichnet, dass** die Füllkörper (81) ein plastisch oder elastisch verformbares Material umfassen, das insbesondere einen Flock, ein Gel, einen Schaum, ein Band, eine Schnur, eine Profilschnur, einen Schlauch und/oder dergleichen, vorzugsweise aus Kunststoff, umfasst.

14. Antriebskabel nach Anspruch 1, **dadurch gekennzeichnet, dass** der Kabelmantel (122) die Kabelseele (32) und die Wendel (33) formschlüssig umgreift und Zwischenräume zwischen den Wendelwindungen ausfüllt.

15. Antriebskabel nach einem der Ansprüche 1 und 11 bis 14, **dadurch gekennzeichnet, dass** der Kabelmantel (102, 122) einen elastisch oder plastisch verformbaren Kunststoff umfasst.

## Claims

1. A drive cable for actuating a vehicle element which is movable with respect to a vehicle body, the drive cable comprising a cable body (31) having a flexible cable core (32) which is wrapped with a spiral (33) which follows a helical line so as to become engaged with a gearwheel, **characterized in that** at least three longitudinal ribs (35, 61, 71) or fillets are formed along the periphery of the cable body (31), said drive cable being able to support itself in a cable guide via said longitudinal ribs (35, 61 71) or fillets, which form at least mostly continuous guiding lines and contact lines of the drive cable, each having continuously the same distance to the cable axis, or **in that** an elastically or plastically malleable cable jacket (102, 122) is provided which engages over the cable core (32) and the spiral (33) and which forms a cylindrical and rib-free peripheral surface of the cable when the cable core (32) is stretched, said peripheral surface of the cable being disposed concentric with respect to the cable axis.

2. The drive cable according to claim 1, **characterized in that** the longitudinal ribs (35, 61, 71) extend parallel to the longitudinal direction of the cable core (32).

3. The drive cable according to claim 1, **characterized in that** the longitudinal ribs (35) each follow a helical line which preferably has a greater pitch than the helical line followed by the spiral (33).

4. The drive cable according to claim 3, **characterized in that** the helical line followed by the longitudinal ribs (35) is disposed inversely to the helical line followed by the spiral (33).

5. The drive cable according to any one of claims 1 to 4, **characterized in that** the longitudinal ribs (35) are part of a jacketing (34) of the cable body (31).

6. The drive cable according to claim 5, **characterized in that** the jacketing (34) is an extruded layer.

7. The drive cable according to claim 5 or 6, **characterized in that** filling bodies (81) are disposed between the jacketing (34) and the cable body (31).

8. The drive cable according to claim 7, **characterized in that** the filling bodies comprise a plastically or elastically malleable material which in particular comprises a flock, a gel, a foam, a belt, a cord, a seal cord, a tube and/or the like, each preferably made of plastic.

9. The drive cable according to any one of claims 5 to 8, **characterized in that** the jacketing (34) is made of an elastically or plastically malleable plastic.

10. The drive cable according to any one of claims 1 to 9, **characterized in that** the longitudinal ribs (35, 61, 71) are made of an elastically or plastically malleable plastic.

11. The drive cable according to claim 1, **characterized in that** the cable jacket (102) is realized by a cable sleeve which engages over the spiral (33).

12. The drive cable according to claim 11, **characterized in that** filling bodies (81) are disposed between the cable sleeve and the cable core (32).

13. The drive cable according to claim 12, **characterized in that** the filling bodies (81) comprise a plastically or elastically malleable material which in particular comprises a flock, a gel, a foam, a belt, a cord, a seal cord, a tube and/or the like, each preferably made of plastic.

14. The drive cable according to claim 1, **characterized in that** the cable jacket (122) surrounds the cable core (32) and the spiral (33) in an interlocking manner and fills gaps between the spiral windings.

15. The drive cable according to claims 1 and 11 to 14, **characterized in that** the cable jacket (102, 122) comprises an elastically or plastically malleable plastic.

## Revendications

1. Câble d'entraînement pour l'actionnement d'un élément d'un véhicule mobile par rapport à la carrosserie du véhicule, le câble d'entraînement comprenant un corps de câble (31) comportant une âme de câble (32) flexible qui est enveloppée d'une hélice (33) pour s'engrener avec une roue dentée, l'hélice (33) suivant une ligne hélicoïdale, **caractérisé en ce qu'**au moins trois nervures longitudinales (35, 61, 71) ou arêtes sont formées sur la circonférence du corps de câble (31), le câble d'entraînement pouvant s'appuyer dans un guide de câble par l'intermédiaire desdites nervures (35, 61, 71) ou arêtes, qui forment des lignes de guidage et de contact du câble d'entraînement qui sont au moins largement continues et qui sont disposées chacune a une distance entièrement constante de l'axe de câble, ou **en ce qu'**un revêtement de câble (102, 122) élastiquement ou plastiquement déformable est fourni qui forme une surface circonférentielle de câble qui est cylindrique et sans nervures lorsque l'âme de câble (32) est tendue et qui est disposée concentriquement par rapport à l'axe de câble, le revêtement de câble (102, 122) entourant l'âme de câble (32) et l'hélice (33).

2. Câble d'entraînement selon la revendication 1, **caractérisé en ce que** les nervures longitudinales (35, 61, 71) s'étendent parallèlement à la direction longitudinale de l'âme de câble (32).

3. Câble d'entraînement selon la revendication 1, **caractérisé en ce que** chaque nervure longitudinale (35) suit une ligne hélicoïdale qui a, de préférence, un pas supérieur au pas de la ligne hélicoïdale suivie par l'hélice (33).

4. Câble d'entraînement selon la revendication 3, **caractérisé en ce que** la ligne hélicoïdale suivie par les nervures longitudinales (35) est disposée en sens contraire à la ligne hélicoïdale suivie par l'hélice (33).

5. Câble d'entraînement selon l'une quelconque des revendications 1 à 4, **caractérisé en ce que** les nervures longitudinales (35) font partie d'un enrobage (34) du corps de câble (31).

6. Câble d'entraînement selon la revendication 5, **caractérisé en ce que** l'enrobage (34) est une couche extrudée.

7. Câble d'entraînement selon la revendication 5 ou 6, **caractérisé en ce que** des corps de remplissage (81) sont disposés entre l'enrobage (34) et le corps de câble (31).

8. Câble d'entraînement selon la revendication 7, **caractérisé en ce que** les corps de remplissage comprennent un matériau plastiquement ou élastiquement déformable qui comprend notamment un floc, un gel, une mousse, un ruban, un cordon, un cordon profilé, un tuyau et/ou d'autres choses semblables, de préférence en matière plastique.

9. Câble d'entraînement selon l'une quelconque des revendications 5 à 8, **caractérisé en ce que** l'enrobage (34) est fait à partir d'une matière plastique élastiquement ou plastiquement déformable.

10. Câble d'entraînement selon l'une quelconque des revendications là 9, **caractérisé en ce que** les nervures longitudinales (35, 61, 71) sont fait à partir d'une matière plastique élastiquement ou plastiquement déformable.

11. Câble d'entraînement selon la revendication 1, **caractérisé en ce que** le revêtement de câble (102) est formé par une gaine de câble qui entoure l'hélice (33).

12. Câble d'entraînement selon la revendication 11, **caractérisé en ce que** des corps de remplissage (81) sont disposés entre la gaine de câble et l'âme de câble (32).

13. Câble d'entraînement selon la revendication 12, **caractérisé en ce que** les corps de remplissage (81) comprennent un matériau plastiquement ou élastiquement déformable qui comprend notamment un floc, un gel, une mousse, un ruban, un cordon, un cordon profilé, un tuyau et/ou d'autres choses semblables, de préférence en matière plastique.

14. Câble d'entraînement selon la revendication 1, **caractérisé en ce que** le revêtement de câble (122) entoure l'âme de câble (32) et l'hélice par engagement positif et des espaces entre les spires de l'hélice sont remplis du revêtement de câble (122).

15. Câble d'entraînement selon l'une quelconque des revendications 1 et 11 à 14, **caractérisé en ce que** le revêtement de câble (102, 122) comprend une matière plastique élastiquement ou plastiquement déformable.
